# EUROPÄISCHE PATENTSCHRIFT

(11) **EP 0 890 824 B1**
(45) Veröffentlichungstag und Bekanntmachung des Hinweises auf die Patenterteilung: **17.09.2003**
(21) Anmeldenummer: 98112852.3
(22) Anmeldetag: 10.07.1998
(51) Int. Cl.: G01D 5/16

(54) **Vorrichtung zum Erfassen von Widerstandsänderungen eines Sensorelements**
Device for measuring the variation in the resistance value of a sensor
Dispositif de mesure des variations de résistance d'un capteur

(30) Priorität: 10.07.1997 DE 29712193 U
(43) Veröffentlichungstag der Anmeldung: 13.01.1999
(73) Patentinhaber: Steinel GmbH & Co. KG, 33442 Herzebrock-Clarholz (DE)
(72) Erfinder: Tetling, Helmut, D-44143 Dortmund (DE)
(74) Vertreter: Behrmann, Niels, Dipl.-Ing.

(56) Entgegenhaltungen:
- DE-A- 2 923 026
- DE-A- 3 111 417
- US-A- 4 945 418

## Beschreibung

Die vorliegende Erfindung betrifft eine Vorrichtung zum Erfassen von Widerstandsänderungen eines Sensorelements, insbesondere des Widerstands eines Phototransistors od.dgl. Lichtsensor, sowie ein Verfahren zur Messung von Widerstandsänderungen.

Bei der Verwendung eines derartigen Phototransistors zur Lichtsteuerung, etwa im Zusammenhang mit einer Umgebungslicht-abhängigen Lichtsteuerung von Beleuchtungsvorrichtungen, stellt sich oftmals das Problem einer einfachen, mit wenig Bauteilen zu realisierenden, digitalen Auswertung eines solchen Sensorsignals. Durch die große Bandbreite der möglichen Impedanzzustände je nach Beleuchtungszustand, etwa im Bereich zwischen 1 kOhm bishin 5 MOhm, wäre durch eine herkömmliche Analog-/Digitalwandlung (siehe z.B DE 29 23 026 A), etwa mittels sukzessiver Approximation oder einem Dual-Slope-Verfahren, durch eine generell eher begrenzte Auflösung des A/D-Wandlers die Vorrichtung insbesondere bei geringen Lichtstärkeschwankungen zu unempfindlich, oder aber es muß beträchtlicher Digitalisierungsaufwand mit einer sehr großen, aufgelösten Wortbreite betrieben werden.

Darüber hinaus besteht das Problem, daß die Widerstandskennlinie eines typischen Phototransistors in Abhängigkeit von der Beleuchtung logarithmisch ist, d.h. in den Steigungsbereichen der Kennlinie entstehen zusätzliche Auflösungsprobleme.

Aufgabe der vorliegenden Erfindung ist es daher, eine Vorrichtung zum Messen von Widerstandsänderungen, etwa an einem Phototransistor in Abhängigkeit von äußerer Lichteinwirkung, zu schaffen, die mit einfachstem Aufwand herstellbar ist, und die trotzdem eine gerade auch im Hinblick auf einen großen Widerstands- bzw. Signalhub geeignete Auflösung für eine nachfolgende digitale Auswertung schafft.

Die Aufgabe wird durch die Vorrichtung mit den Merkmalen des Patentanspruches 1 sowie das Verfahren mit dem Patentanspruch 7 gelöst.

Vorteilhafte Weiterbildungen der Erfindung sind in den Unteransprüchen beschrieben.

Vorteilhaft wird durch die Erfindung erreicht, daß zum einen der interne Systemtakt des Prozessors gezielt in Abhängigkeit von der zu messenden Widerstandsänderung verändert wird, und daß entsprechend eine Anzahl von Betriebszyklen des Prozessors sich innerhalb eines vorbestimmten, (externen) Referenztaktes abhängig von dem jeweiligen, zu messenden, externen Widerstandswert verhält.

Mit anderen Worten, durch einfaches Erfassen der Prozessoraktivität -- etwa das kontinuierliche Hochzählen eines internen Timers -- innerhalb der externen, bevorzugt konstanten Referenzzeit und einem Vergleich mit früheren Werten ist eine vergleichsweise hochauflösende Beobachtung der aktuellen Impedanz des Phototransistors möglich.

Weiterhin vorteilhaft hat sich herausgestellt, daß sich auch die Oszillatorkennlinie des Prozessors in Abhängigkeit von dem Widerstandswert logarithmisch verhält, so daß auf diesem Weg eine Kompensation der Phototransistor-Kennlinie bzw. eine intern linearisierte Abbildung derselben durch den Prozessor erreicht werden kann.

Vorteilhaft und weiterbildungsgemäß wird zudem der externe Referenztakt unmittelbar oder indirekt aus der Netzfrequenz entnommen, so daß hierfür kein zusätzlicher größerer Aufwand notwendig ist.

Auch ist es erfindungsgemäß vorteilhaft, unmittelbar eine interne Zählereinrichtung od.dgl. Funktion des Prozessortyps zu wählen, die bei bestmöglicher Auflösung das Erzeugen interner Prozessorschritte gestattet.

Im Zusammenhang mit der Erfindung ist als Mikroprozessor-Einheit jegliche integrierte Schaltung zu verstehen, die einen RC-Oszillator zur Takterzeugung besitzt und zu diesem Zweck mit zumindest einem Ohm'schen Widerstand beschaltet wird (das C kann entweder auch extern angelegt oder aber prozessorintern bereits vorhanden sein).

Im Rahmen der Erfindung können ansonsten beliebige Prozessoren, einschließlich Mikrocontroller, eingesetzt werden.

Weitere Vorteile, Merkmale und Einzelheiten der Erfindung ergeben sich aus der nachfolgenden Beschreibung von Ausführungsbeispielen sowie anhand der Figuren; diese zeigen in
- Fig. 1:: ein Blockschaltbild einer grundsätzlichen Beschaltung einer Mikroprozessoreinheit gemäß einer ersten Ausführungsform der Erfindung und
- Fig. 2:: eine Detailansicht von Funktionskomponenten der Mikroprozessoreinheit gemäß Fig. 1.

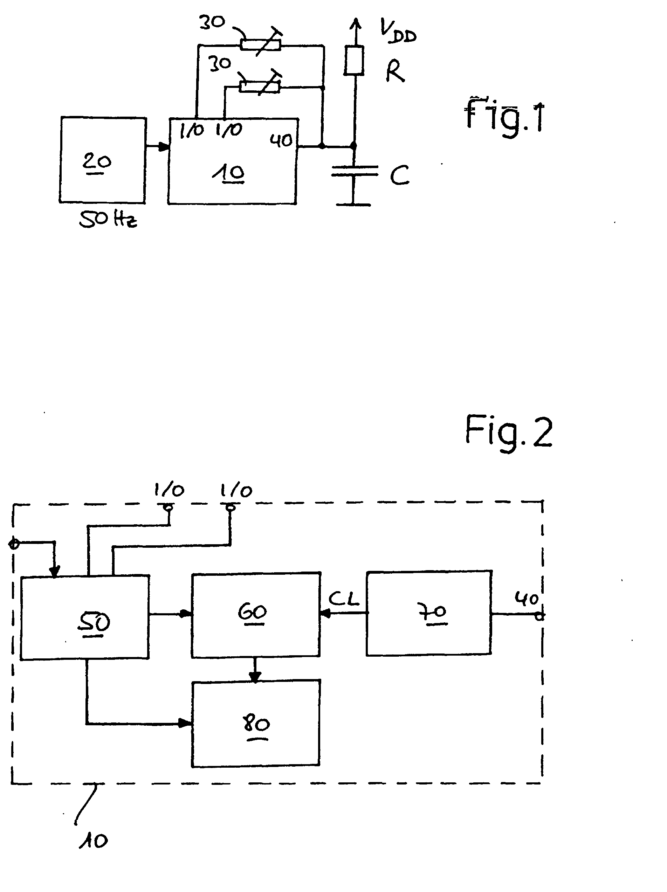

Fig. 1 zeigt eine erste, bevorzugte Ausführungsform der Erfindung, bei welcher die Mikroprozessoreinheit durch einen Mikrocontroller 10, etwa hergestellt von der Firma Arizona Microchip, realisiert ist. Dieser Controller 10 ist extern mit einer Referenztakteinheit 20 verbunden, die etwa aus dem Stromversorgungsnetz einen Referenztakt von 50 Hz (entsprechend einer Zykluszeit von 20 ms) unmittelbar ableitet.

Zwei Input-/Output-Ports (I/O) des Controllers 10 sind mit Phototransistoren 30 verbunden, die im Blockschaltbild als variable Widerstände dargestellt sind. Die gezeigte Ausführungsform stellt somit einen zweikanaligen Betrieb dar, bei welchem über die 2I/O-Ports die jeweiligen Phototransistoren unabhängig voneinander berücksichtigt werden können.

Anderenends sind die variablen Widerstände 30 gemeinsam auf einen Oszillatorport 40 des Controllers 10 geführt, der extern mit einem RC-Glied mit Festwiderstand R = 10 kOhm und C = 100 pF realisiert ist. Durch diese externe Beschaltung am Oszillatorport 40 ergibt sich für den beispielhaft eingesetzten Controller ein Prozessortakt von ca. 1 Mhz.

Fig. 2 zeigt weiter im Detail die Struktur des Prozessors 10: eine interne Steuereinheit 50 aktiviert oder deaktiviert die I/O-Ports für die Phototransistoren 30, wobei in einem inaktiven Zustand ein Port auf hochohmigem Potential liegt, während bei Aktivierung dieser auf V_{DD} gelegt wird.

Die Steuereinheit empfängt das externe Zeitsignal des Referenzzeitmoduls 20 und triggert einen prozessorinternen Timer bzw. Zähler 60, der dann innerhalb der Referenzzeit (z.B. 20 ms bei 50 Hz-Referenztakt) den aktuellen Bustakt des internen Taktgenerators 70 zählt. Dieser Taktgenerator ist in der oben beschriebenen Weise über den Oszillatorport 40 mit der externen RC-Beschaltung verbunden.

Ein Zählerstand der Zählereinheit 60 kann dann über eine prozessorinterne Auswerteinheit 80 ausgewertet bzw. extern ausgegeben werden.

Durch die oben beschriebene Anordnung ergibt sich durch Veränderung des Ohm'schen Widerstandes am Oszillatorport 40 bei festem C ein variabler Arbeitstakt für den Prozessor, wobei, durch die bei Aktivierung durch den Prozessor mit dem Festwiderstand R parallelen Widerstände 30, die Anzahl der Taktzyklen des Clockgenerators 70 pro Zeiteinheit -- vorgegeben durch die Referenzzeit 20 -- ein Maß für einen aktuell anliegenden, externen Widerstandswert ist. Dabei bildet der Festwiderstand R mit dem verwendeten C den Grundoszillator, der zum einen den Bezugswert für diese A/D-Wandlung liefert, und der zum anderen für den sicheren Anlauf des Gesamtsystems sorgt.

Für das Durchführen der Messung werden dann, etwa als Reaktion auf das externe Taktsignal und durch Steuerwirkung der Steuereinheit 50, die zu messenden Widerstände 30 (entweder einzeln oder mehrkanalig getrennt) mittels der I/O-Ports auf den R-C-Oszillator geschaltet, und zwar dadurch, daß ein jeweiliger I/O-Port auf V_{DD} gelegt wird.

Die sich dadurch ergebende Änderung des Systemtaktes des Clockgenerators 70 durch die veränderte, externe Beschaltung am Oszillatorport 40 wird prozessorintern dadurch erfaßt, daß der Zähler 60 innerhalb des (unveränderten) externen Zeittaktes eine veränderte Anzahl von Malen zählt; im einfachsten Fall ist der Zähler 60 als Inkrementalzähler realisiert, der als Reaktion auf jedes Taktsignal des Blockgenerators 70 seinen Zählerstand um 1 erhöht.

Periodisch kann dann über die Einheit 80 ein jeweiliger Zählerstand bzw. dessen Veränderung entsprechend der Referenzzeit digital erfaßt und ausgegeben werden, wobei insbesondere dann eine Veränderung des Zählerinhalts für aufeinanderfolgende Referenztakte ein Maß für die Widerstandsänderung ist.

Besonders vorteilhafterweise wird zudem durch das logarithmische Verhalten des Oszillatortaktes in Abhängigkeit vom Widerstand des externen RC-Gliedes (bzw. der Veränderung der R-Komponente) die Kennlinie des Phototransistors (bzw. des variablen Widerstandes R) kompensiert, so daß intern über den vollständigen Helligkeitsbereich des Phototransistors eine annähernd lineare Auswertung bei sehr guter Auflösung über den gesamten Meßbereich erfolgt.

Dabei ist etwa für die erfindungsgemäße Zählung der Arbeitstakte nicht notwendigerweise ein interner Timer/Zähler erforderlich; dies könnte auch über Zählerschleifen od.dgl. sonstige Einrichtungen erfolgen.

Auch muß die externe Zeitreferenz nicht notwendigerweise aus einer Netzspannung abgeleitet sein; diese kann auch durch einen externen, konstant laufenden Oszillator angelegt sein.

Im Ergebnis kann so erfindungsgemäß durch die zu erfassende Meßgröße ein Controller- bzw. Prozessortakt verändert werden, dessen daraufhin beschleunigte oder verlangsamte Prozessoraktivitäten -- etwa Zählen oder andere Vorgänge -- innerhalb einer Referenzzeit beobachtet werden.

Im praktischen Ausführungsbeispiel eines Prozessortaktes von 1 MHz würde dann der Zähler 60 mit dieser Frequenz inkrementiert werden. Innerhalb einer durch die Zeitreferenz vorgegebenen Periode von 20 ms würde auf diese Weise der Zähler jeweils bis auf den Wert 20.000 inkrementiert werden. Entsprechende Widerstandsschwankungen der externen R-Beschaltung wirken sich dann jedoch in (bezogen auf die Lichtstärkeschwankungen in nahezu linearer Weise) auf diesen Zählerwert aus, wobei diese Veränderung dann zur externen Ausgabe weiterverarbeitet werden kann.

## Patentansprüche

1. Vorrichtung zum Erfassen von Widerstandsänderungen eines Sensorelements (30), insbesondere des Widerstands eines Phototransistors od.dgl. Lichtsensor, mit
einer einen internen Taktgenerator (70) zur Beschaltung mit einem externen Ohm'schen Widerstand (R) aufweisenden Mikroprozessoreinheit (10),
die zum gesteuerten Verbinden des externen Ohm'schen Widerstandes (R) mit dem Sensorelement (30) aktivierbar ist,
wobei als Reaktion auf ein extern an die Mikroprozessoreinheit (10) anlegbares Zeit-Referenzsignal (20) eine Veränderung einer Anzahl von Prozessor-Betriebszyklen in einem durch das Zeit-Referenzsignal (20) vorgegebenen Zeitbereich als Maß für die Widerstandsänderung des Sensorelements (30) von der Mikroprozessor-Einheit (10) abgreifbar und/oder auswertbar ist.

2. Vorrichtung nach Anspruch 1, **dadurch gekennzeichnet, daß** das Zeit-Referenzsignal aus der Frequenz eines Versorgungsnetzes gewonnen wird.

3. Vorrichtung nach Anspruch 1 oder 2, **dadurch gekennzeichnet, daß** die Prozessor-Betriebszyklen das Zählen interner Taktsignale mittels einer Zähler (60)- bzw. Timereinheit in der Mikroprozessor-Einheit (10) umfassen.

4. Vorrichtung nach einem der Ansprüche 1 bis 3, **dadurch gekennzeichnet, daß** das Sensorelement (30) als Lichtsensor ausgebildet ist und eine logarithmische Kennlinie aufweist.

5. Vorrichtung nach einem der Ansprüche 1 bis 4, **gekennzeichnet durch** einen mehrkanaligen Aufbau zum Erfassen von Widerstandsänderungen einer Mehrzahl von Sensorelementen (30).

6. Vorrichtung nach einem der Ansprüche 1 bis 5, **dadurch gekennzeichnet, daß** die Mikroprozessoreinheit (10) zum digitalen Ausgeben des Maßes für die Widerstandsänderung ausgebildet ist.

7. Verfahren zur Messung von Widerstandsänderungen eines Sensorelements, insbesondere zum Betreiben einer Vorrichtung nach einem der Ansprüche 1 bis 6, **gekennzeichnet durch** die Schritte:
- gesteuertes Verbinden eines externen Festwiderstandes (R) mit dem einen variablen Widerstand aufweisenden Sensorelement (30) **durch** eine Mikroprozessoreinheit (10), die mit einem vom Festwiderstand abhängigen Prozessortakt betrieben wird, und
- Erfassen und Auswerten einer Veränderung des Prozessortaktes innerhalb eines Referenz-Zeitbereiches als Reaktion auf das Verbinden.

## Claims

1. Device for detecting changes in resistance of a sensor element (30), in particular the resistance of a phototransistor or the like light sensor, with a microprocessor unit (10) which comprises an internal clock generator (70) for wiring to an external ohmic resistance (R) and which is activatable for controlled connection of the external ohmic resistance (R) to the sensor element (30), wherein, as a reaction to a time reference signal (20) which can be applied externally to the microprocessor unit (10), a change in a number of processor operating cycles within a time domain predetermined by the time reference signal (20) can be picked off and/or evaluated by the microprocessor unit (10) as a measure of the change in resistance of the sensor element (30).

2. Device according to claim 1, **characterised in that** the time reference signal is obtained from the frequency of a supply network.

3. Device according to claim 1 or 2, **characterised in that** the processor operating cycles include the counting of internal clock signals by means of a counter (60) or timer unit in the microprocessor unit (10).

4. Device according to any of claims 1 to 3, **characterised in that** the sensor element (30) is designed as a light sensor and exhibits a logarithmic characteristic curve.

5. Device according to any of claims 1 to 4, **characterised by** a multi-channel structure for detecting changes in resistance of a plurality of sensor elements (30).

6. Device according to any of claims 1 to 5, **characterised in that** the microprocessor unit (10) is designed for digital output of the measure of the change in resistance.

7. Method for the measurement of changes in resistance of a sensor element, in particular for operating a device according to any of claims 1 to 6, **characterised by** the steps of:
- controlled connection of an external fixed resistor (R) to the sensor element (30) which comprises a variable resistor, by a microprocessor unit (10) which is operated with a processor cycle dependent on the fixed resistor, and
- detection and evaluation of a change of the processor cycle within a reference time domain as a reaction to connection.

## Revendications

1. Dispositif de mesure des variations de la résistance d'un capteur (30), plus particulièrement de la résistance d'un phototransistor ou d'un capteur optique avec une unité à microprocesseur (10) présentant un générateur d'horloge interne (70) pour raccordement avec une résistance ohmique externe (R),
qui peut être activé pour connexion commandée de la résistance ohmique externe en Ohm (R) avec le capteur (30) ;
de sorte que, en tant que réaction à un signal temporel de référence externe (20) appliqué au microprocesseur, une variation d'un nombre de cycles de fonctionnement du processeur dans une plage de temporisation prévue par le signal temporel de référence (20) comme mesure pour la variation de la résistance du capteur (30) peut être estimée et/ou évaluée par l'unité à du microprocesseur (10).

2. Dispositif selon la revendication 1, **caractérisé en ce que** le signal temporel de référence est issu de la fréquence d'un réseau d'alimentation électrique.

3. Dispositif selon la revendication 1 ou 2, **caractérisé en ce que** les cycles de fonctionnement du processeur comprennent le comptage de signaux d'horloge internes au moyen d'un compteur (60) ou d'un séquenceur dans l'unité à microprocesseur (10).

4. Dispositif selon une des revendications 1 à 3, **caractérisé en ce que** le capteur (30) est sous forme d'un capteur optique et présente une courbe logarithmique caractéristique.

5. Dispositif selon une des revendications 1 à 4, **caractérisé par** une structure à canaux multiples pour la mesure des variations de la résistance d'une pluralité de capteurs (30).

6. Dispositif selon une des revendications 1 à 5, **caractérisé en ce que** l'unité à microprocesseur (10) est prévue pour indiquer de manière numérique la mesure de la variation de résistance.

7. Procédé de mesure des variations de la résistance d'un capteur, plus particulièrement par l'utilisation d'un dispositif selon une des revendications 1 à 6, **caractérisé par** les étapes :
- connexion commandée d'une résistance fixe externe (R) avec le capteur (30) présentant une résistance variable par l'intermédiaire d'une unité à microprocesseur (10) qui fonctionne avec un cycle du processeur dépendant de la résistance fixe, et
- mesure et évaluation d'une variation du cycle du processeur dans une plage de temporisation de référence comme réaction à la connexion.
